# EUROPEAN PATENT APPLICATION

(11) **EP 4 742 285 A1**
(43) Date of publication of application: **13.05.2026**
(21) Application number: 24835935.8
(22) Date of filing: 21.06.2024
(51) Int. Cl.: H01F 38/14, B60L 5/00, B60L 53/12, B60M 7/00, H01F 27/28, H02J 50/10

(54) **COIL COMPONENT, POWER TRANSMISSION DEVICE, POWER RECEPTION DEVICE, MOBILE BODY, AND POWER TRANSMISSION SYSTEM**

(30) Priority: 04.07.2023 JP 2023110320
(71) Applicant: Dai Nippon Printing Co., Ltd., Tokyo 162-8001 (JP)
(72) Inventor: OKABE, Masato, Tokyo 162-8001 (JP)
(74) Representative: Müller-Boré & Partner Patentanwälte PartG mbB
(86) International application number: PCT/JP2024/022684
(87) International publication number: WO 2025/009422

(57) **Abstract**

A coil component (5) includes a coil 10 including first and second planar coil elements 11 and 12. The planar coil elements 11 and 12 have spiral shapes having a plurality of turn portions 111 to 116 and 121 to 123, respectively. The planar coil elements 11 and 12 are disposed to face each other in an axial direction extending along central axes C1 and C2 of the spiral shapes. The planar coil elements 11 and 12 are connected in series to each other. The number of turns T2 of the second planar coil element 12 is smaller than the number of turns T1 of the first planar coil element 11. Furthermore, as viewed in the axial direction, at least one of the plurality of turn portions 121 to 123 of the second planar coil element 12 overlaps two or more of the plurality of turn portions 111 to 116 of the first planar coil element 11. Furthermore, as viewed in the axial direction, each gap between the plurality of turn portions 121 to 123 of the second planar coil element 12 overlaps any one of the gaps between the plurality of turn portions 111 to 116 of the first planar coil element 11.

## Description

### Technical Field

The present disclosure relates to a coil component, a power transmitter, a power receiver, a mobile body, and a power transmission system.

### Background Art

Wireless power transmission systems that transmit power in a non-contact manner are becoming widespread.

When power is transmitted in a non-contact manner, a high-frequency current is caused to flow through a resonant circuit including a coil. A coil component used in such a resonant circuit is disclosed in PTL 1. The coil component disclosed in PTL 1 uses a coil formed by stacking two plate-shaped planar coil elements having a spiral shape. This reduces the size of the coil in plan view.

When the coil is formed as a stacked structure of two planar coil elements, two planar coil elements having the same or corresponding patterns (that is, having the same number of turns and the same pitch of turn portions) are produced, as disclosed in PTL 1. Then, the two planar coil elements are superposed one above the other and electrically connected.

### Citation List

### Patent Literature

PTL 1: Japanese Unexamined Patent Application Publication No. 2021-27112

Meanwhile, it is required to improve the production efficiency of coil components. The production efficiency of coil components can be improved, for example, by improving the ease of handling of members constituting a coil component. In particular, in the case of a coil component in which the planar coil elements have a small thickness, difficulty in handling the planar coil elements when assembling the coil component is problematic.

The purpose of an embodiment of the present disclosure is to improve the production efficiency of coil components.

### Disclosure of Invention

An embodiment of the present disclosure relates to [1] to [19] below.
[1] A coil component including: a coil including a first planar coil element and a second planar coil element each having a spiral shape having a plurality of turn portions, the first and second planar coil elements being disposed to face each other in an axial direction extending along central axes of the spiral shapes and being connected in series to each other, wherein
   the number of turns of the second planar coil element is smaller than the number of turns of the first planar coil element,
   as viewed in the axial direction, at least one of the plurality of turn portions of the second planar coil element overlaps two or more of the plurality of turn portions of the first planar coil element, and
   as viewed in the axial direction, each gap between the plurality of turn portions of the second planar coil element overlaps any one of gaps between the plurality of turn portions of the first planar coil element.
[2] The coil component according to [1], wherein the number of turns of the first planar coil element is twice the number of turns of the second planar coil element, and
   as viewed in the axial direction, each turn portion of the second planar coil element overlaps two turn portions of the first planar coil element.
[3] The coil component according to [1] or [2], wherein, as viewed in the axial direction, a radially inner edge of each turn portion of the second planar coil element overlaps a radially inner edge of any of the turn portions of the first planar coil element, and a radially outer edge of each turn portion of the second planar coil element overlaps a radially outer edge of any of the turn portions of the first planar coil element.
[4] The coil component according to any one of [1] to [3], wherein the plurality of turn portions of the second planar coil element are provided with a slotted hole extending along the turn portions of the second planar coil element.
[5] The coil component according to [4], wherein the slotted hole extends along the spiral shape of the second planar coil element.
[6] The coil component according to [4] or [5], wherein, as viewed in the axial direction, the slotted hole overlaps any one of the gaps between the plurality of turn portions of the first planar coil element.
[7] The coil component according to any one of [1] to [6], wherein the thickness of the second planar coil element is 0.15 mm or more and 0.35 mm or less.
[8] The coil component according to any one of [1] to [7], further including a magnetic shield member disposed to face the second planar coil element.
[9] The coil component according to [8], further including a magnetic wall portion extending in the axial direction and extending along gaps between the plurality of turn portions of the first planar coil element as viewed in the axial direction,
   wherein the magnetic wall portion is disposed to face a second surface of the first planar coil element, the second surface being opposite to a first surface of the first planar coil element facing the second planar coil element.
[10] The coil component according to [8], further including a magnetic wall portion extending in the axial direction and extending along gaps between the plurality of turn portions of the first planar coil element as viewed in the axial direction,
   wherein the magnetic wall portion extends in the axial direction from one side to the other side of the first planar coil element through the gaps between the plurality of turn portions of the first planar coil element.
[11] The coil component according to any one of [1] to [7], further including a magnetic shield member disposed to face the first planar coil element.
[12] The coil component according to [11], further including a magnetic wall portion extending in the axial direction and extending along gaps between the plurality of turn portions of the second planar coil element as viewed in the axial direction,
   wherein the magnetic wall portion is disposed to face a fourth surface of the second planar coil element, the fourth surface being opposite to a third surface of the second planar coil element facing the first planar coil element.
[13] The coil component according to [11], further including a magnetic wall portion extending in the axial direction and extending along gaps between the plurality of turn portions of the second planar coil element as viewed in the axial direction,
   wherein the magnetic wall portion extends in the axial direction from one side to the other side of the second planar coil element through the gaps between the plurality of turn portions of the second planar coil element.
[14] The coil component according to any one of [11] to [13], wherein
   the plurality of turn portions of the second planar coil element are provided with a slotted hole extending along the turn portions of the second planar coil element,
   the coil component further includes an additional magnetic wall portion,
   the additional magnetic wall portion extends in the axial direction and extends along the slotted hole as viewed in the axial direction, and
   the additional magnetic wall portion is disposed to face the fourth surface of the second planar coil element, the fourth surface being opposite to the third surface of the second planar coil element facing the first planar coil element.
[15] The coil component according to any one of [11] to [13], wherein
   the plurality of turn portions of the second planar coil element are provided with a slotted hole extending along the turn portions of the second planar coil element,
   the coil component further includes an additional magnetic wall portion,
   the additional magnetic wall portion extends in the axial direction and extends along the slotted hole as viewed in the axial direction, and
   the additional magnetic wall portion extends in the axial direction from one side to the other side of the second planar coil element through the slotted hole provided in the plurality of turn portions of the second planar coil element.
[16] A power transmitter including the coil component according to any one of [1] to [15].
[17] A power receiver including the coil component according to any one of [1] to [15].
[18] A mobile body including the power receiver according to [17].
[19] A power transmission system including a power transmitter and a power receiver,
   wherein at least one of the power transmitter and the power receiver includes the coil component according to any one of [1] to [15].

According to an embodiment of the present disclosure, it is possible to improve the production efficiency of coil components.

### Brief Description of Drawings

[Fig. 1] Fig. 1 schematically illustrates a wireless power transmission system to which a coil component according to an embodiment is applied.
[Fig. 2] Fig. 2 is a perspective view of the coil component according to the embodiment.
[Fig. 3] Fig. 3 is a sectional view of the coil component, taken along line III-III in Fig. 2.
[Fig. 4] Fig. 4 is an exploded perspective view of a coil of the coil component shown in Fig. 3.
[Fig. 5] Fig. 5 is a diagram corresponding to Fig. 3 and is a sectional view illustrating a modification of the coil component.
[Fig. 6] Fig. 6 is a diagram corresponding to Fig. 3 and is a sectional view illustrating another modification of the coil component.
[Fig. 7] Fig. 7 is an exploded perspective view of a coil of the coil component shown in Fig. 6.
[Fig. 8] Fig. 8 is a diagram corresponding to Fig. 3 and is a sectional view illustrating still another modification of the coil component.
[Fig. 9] Fig. 9 is a diagram corresponding to Fig. 3 and is a sectional view illustrating still another modification of the coil component.
[Fig. 10] Fig. 10 is an exploded perspective view of a coil of the coil component shown in Fig. 9.
[Fig. 11] Fig. 11 is a diagram corresponding to Fig. 3 and is a sectional view illustrating still another modification of the coil component.
[Fig. 12] Fig. 12 is a diagram corresponding to Fig. 2 and is a perspective view illustrating still another modification of the coil component.
[Fig. 13] Fig. 13 is a sectional view of the coil component, taken along line XIII-XIII in Fig. 12.
[Fig. 14] Fig. 14 is an exploded perspective view of a coil of the coil component shown in Fig. 13.
[Fig. 15] Fig. 15 is a diagram corresponding to Fig. 13 and is a sectional view illustrating still another modification of the coil component.
[Fig. 16] Fig. 16 is a diagram corresponding to Fig. 3 and is a sectional view of a coil component according to Comparative Examples 1 to 3.
[Fig. 17] Fig. 17 is a diagram corresponding to Fig. 3 and is a sectional view of a coil component according to Comparative Example 4.
[Fig. 18] Fig. 18 is a diagram corresponding to Fig. 3 and is a sectional view of a coil component according to Comparative Example 5.
[Fig. 19] Fig. 19 is a diagram corresponding to Fig. 3 and is a sectional view of a coil component according to Comparative Example 6.
[Fig. 20] Fig. 20 is a table illustrating the performance of coil components of Examples 1 to 4 and Comparative Examples 1 to 6.
[Fig. 21] Fig. 21 is a graph illustrating the performance of coil components of Examples 1 to 4 and Comparative Examples 1 to 6.

### Description of Embodiments

Hereinbelow, an embodiment and modifications thereof will be described with reference to the drawings. In the drawings attached to the present specification, for convenience of illustration and ease of understanding, scales, aspect ratios, and the like are appropriately changed and exaggerated from those of actual objects.

In the present specification, terms such as "sheet," "film," and "plate" are not distinguished from one another based solely on differences in name. Accordingly, for example, a "sheet" is a concept including members that may also be called a film or a plate.

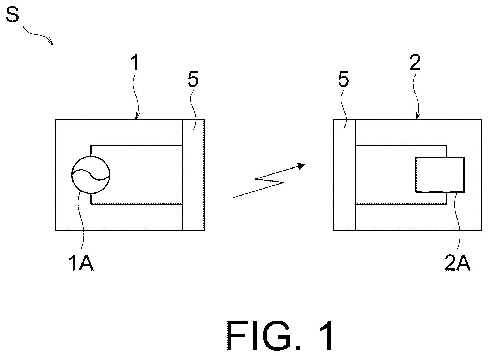

Fig. 1 schematically illustrates a wireless power transmission system S to which a coil component 5 according to an embodiment is applied. First, the wireless power transmission system S (hereinbelow simply referred to as the power transmission system S) will be described with reference to Fig. 1. It is to be understood that a coil component different from the coil component 5 according to this embodiment may be applied to the power transmission system S.

### Wireless Power Transmission System

The power transmission system S includes a power transmitter 1 and a power receiver 2. The power transmitter 1 includes a coil component 5 and a high-frequency current supply unit 1A. The coil component 5 in the power transmitter 1 serves as a power transmission coil component. The high-frequency current supply unit 1A supplies a high-frequency current to the coil component 5, serving as the power transmission coil component.

The power receiver 2 includes a coil component 5 and a conversion unit 2A. The coil component 5 in the power receiver 2 serves as a power reception coil component. The conversion unit 2A shapes a high-frequency current generated in the coil component 5. The conversion unit 2A has, for example, a rectifier circuit that converts the high-frequency current into a direct current. The conversion unit 2A may include, for example, a smoothing capacitor, and a full-wave rectifier circuit including a plurality of diodes.

In this embodiment, each of the power transmitter 1 and the power receiver 2 includes the coil component 5. However, the coil component 5 may be used in only one of the power transmitter 1 and the power receiver 2, and a coil component of a different type may be used in the other.

When power is wirelessly (in a non-contact manner) transmitted from the power transmitter 1 to the power receiver 2, the power transmitter 1 supplies a high-frequency current of a predetermined frequency from the high-frequency current supply unit 1A to the coil component 5, serving as the power transmission coil component. At this time, a magnetic field is generated in the coil component 5 by electromagnetic induction. Then, due to the influence of this magnetic field, a high-frequency current is generated in the coil component 5, serving as the power reception coil component, in the power receiver 2. Specifically, the power receiver 2 receives a magnetic field from the power transmitter 1 or is influenced by the magnetic field in the power transmitter 1, and allows a high-frequency current to flow by electromagnetic induction. The conversion unit 2A converts this high-frequency current into a direct current and supplies the converted direct current to, for example, a battery (not shown).

The power transmission system S shown in Fig. 1 uses a magnetic resonance method as a power transmission method. However, the coil component 5 according to this embodiment may be used in a power transmission system that uses an electromagnetic induction method. The power transmission system S is configured as a system that wirelessly transmits power to an electric vehicle. In this case, the power transmitter 1 is installed on or under a surface of a road, a parking lot, or the like. The power receiver 2 is installed in the electric vehicle.

However, the application of the power transmission system S is not limited to power transmission to electric vehicles. For example, the power transmission system S may be used to transmit power to aerial vehicles, such as drones, and robots. Furthermore, the power transmission system S may be used to transmit power to submersibles in the sea or exploration robots. As described, the power transmission system S can be used for power transmission to various mobile bodies, such as electric vehicles, aerial vehicles, robots, and submersibles. Furthermore, the application of the coil component 5 is not limited to wireless power transmission systems. For example, the coil component 5 may be used in transformers, DC-DC converters, and antennas.

### Coil Component

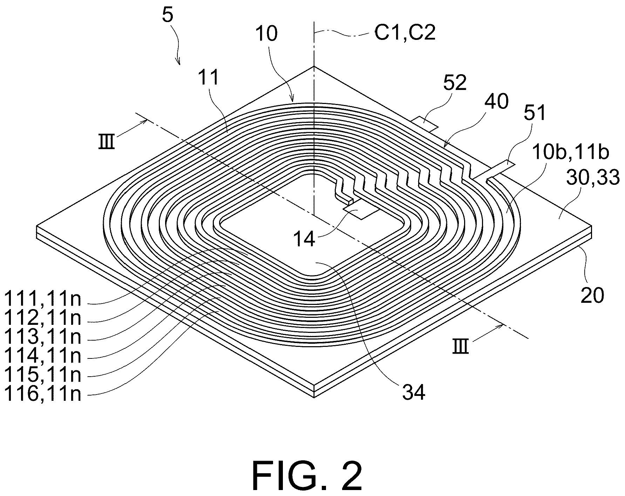

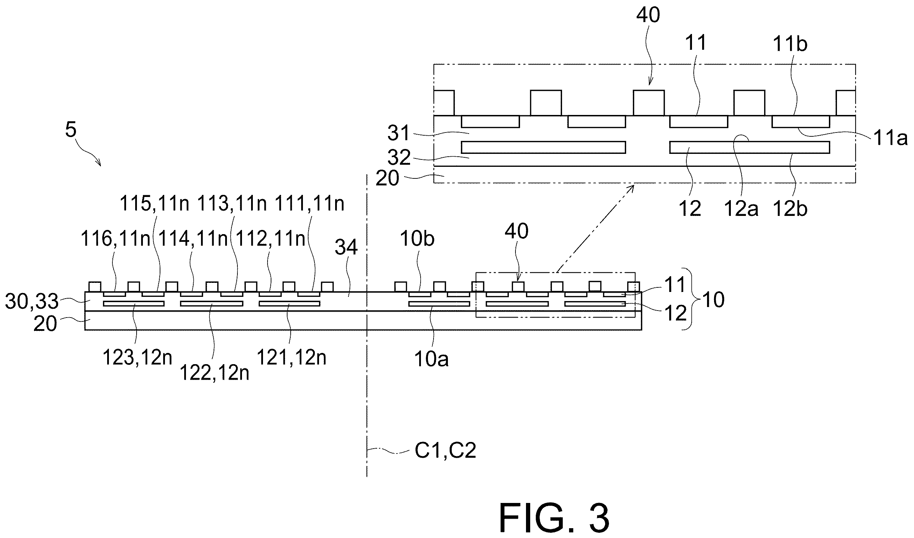

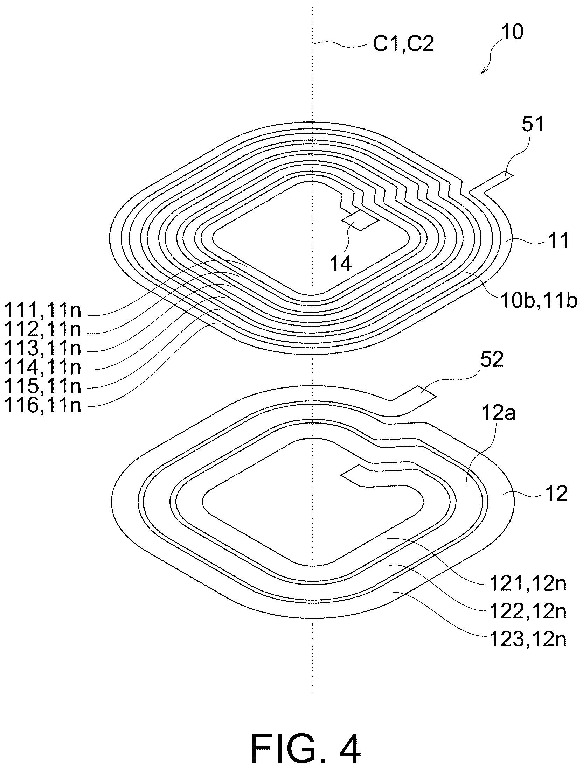

Hereinbelow, the coil component 5 will be described. Fig. 2 is a perspective view of the coil component 5. Fig. 3 is a sectional view of the coil component 5, taken along line III-III in Fig. 2. Fig. 4 is an exploded perspective view of a coil 10 included in the coil component 5.

As shown in Figs. 2 and 3, the coil component 5 includes the coil 10, a magnetic shield member 20, a holder 30, a magnetic wall portion 40, a first connection terminal 51, and a second connection terminal 52.

As shown in Fig. 3, the coil 10 has a back surface 10a facing the magnetic shield member 20 and a front surface 10b on the opposite side of the back surface 10a. The coil 10 further has a first planar coil element 11 and a second planar coil element 12. In the example shown in Fig. 3, the first planar coil element 11 forms the front surface 10b, and the second planar coil element 12 forms the back surface 10a. In other words, in the coil component 5 shown in Fig. 3, the second planar coil element 12 and the first planar coil element 11 are disposed in this order on the magnetic shield member 20. The first planar coil element 11 and the second planar coil element 12 are connected in series and overlap with a gap therebetween. The second planar coil element 12 and the magnetic shield member 20 also overlap with a gap therebetween.

The holder 30 serves to maintain the gap between the first planar coil element 11 and the second planar coil element 12 and to maintain the gap between the second planar coil element 12 and the magnetic shield member 20. The holder 30 also serves to integrate the first planar coil element 11 and the second planar coil element 12.

### First Planar Coil Element and Second Planar Coil Element

As shown in Figs. 2 and 4, the first planar coil element 11 and the second planar coil element 12 each have a spiral shape. The first planar coil element 11 and the second planar coil element 12 are formed of a conductive material. In this embodiment, the first planar coil element 11 and the second planar coil element 12 contain copper. Specifically, the first planar coil element 11 and the second planar coil element 12 are formed of copper. However, the first planar coil element 11 and the second planar coil element 12 may be formed of a copper alloy, aluminum, an aluminum alloy, or the like. The first planar coil element 11 and the second planar coil element 12 may be formed of different conductive materials.

As shown in Figs. 3 and 4, the first planar coil element 11 and the second planar coil element 12 are plate-shaped. As shown in Fig. 3, the cross-sectional shape of the first planar coil element 11 in a direction orthogonal to a direction in which the first planar coil element 11 winds in the spiral shape is rectangular. Similarly, a cross-sectional shape of the second planar coil element 12 in a direction orthogonal to a direction in which the second planar coil element 12 winds in the spiral shape is rectangular.

The first planar coil element 11 has a first surface 11a facing the second planar coil element 12 and a second surface 11b opposite to the first surface 11a. In the example shown in Fig. 4, the second surface 11b forms the front surface 10b of the coil 10.

The second planar coil element 12 has a third surface 12a facing the first planar coil element 11 and a fourth surface 12b on the opposite side of the third surface 12a. In the example shown in Fig. 4, the fourth surface 12b forms the back surface 10a of the coil 10.

Reference sign C1 shown in Figs. 2 to 4 indicates a first central axis of the first planar coil element 11, the first central axis passing through the center of the spiral shape of the first planar coil element 11. Hereinbelow, the term "axial direction of the first planar coil element 11" means a direction extending along the first central axis C1 or a direction parallel to the first central axis C1. The term "radial direction of the first planar coil element 11" means the radial direction of a circle drawn on a plane orthogonal to the first central axis C1 with an arbitrary point on the first central axis C1 as a center. Furthermore, the radially inner side of the first planar coil element 11 and of turn portions 11n constituting the first planar coil element 11 means a direction toward the first central axis C1 in the radial direction. Furthermore, the radially outer side of the first planar coil element 11 and of the turn portions 11n means a direction away from the first central axis C1 in the radial direction.

Reference sign C2 shown in Figs. 2 to 4 indicates a second central axis of the second planar coil element 12, the second central axis passing through the center of the spiral shape of the second planar coil element 12. Hereinbelow, the term "axial direction of the second planar coil element 12" means a direction extending along the second central axis C2 or a direction parallel to the second central axis C2. The term "radial direction of the second planar coil element 12" means the radial direction of a circle drawn on a plane orthogonal to the second central axis C2 with an arbitrary point on the second central axis C2 as a center. Furthermore, the radially inner side of the second planar coil element 12 and of turn portions 12n constituting the second planar coil element 12 means a direction toward the second central axis C2 in the radial direction. Furthermore, the radially outer side of the second planar coil element 12 and of the turn portions 12n means a direction away from the second central axis C2 in the radial direction.

In this embodiment, the second planar coil element 12 is arranged so as to be coaxial with the first planar coil element 11. That is, the first central axis C1 of the first planar coil element 11 and the second central axis C2 of the second planar coil element 12 coincide with each other. In other words, the first central axis C1 and the second central axis C2 are located on the same straight line.

The first planar coil element 11 has a conductor 11E in which a plurality of turn portions 11n form a spiral shape. The plurality of turn portions 11n of the first planar coil element 11 are arranged in a direction orthogonal to the first central axis C1 of the spiral shape. Specifically, the plurality of turn portions 11n are connected such that the distance from the first central axis C1 gradually increases from the first central axis C1 of the spiral shape toward the radially outer side. In this way, the spiral shape is formed.

Basically, each turn portion 11n has a shape in which a line-shaped conductor portion makes a 360-degree turn about the first central axis C1 without forming an annular shape. In the case of a so-called planar coil, ends of each turn portion 11n are displaced from each other in the radial direction. In the plurality of turn portions 11n, the radially outer end of one turn portion 11n is connected to the radially inner end of another turn portion 11n, and the other turn portion 11n extends so as to be away from the first central axis C1.

Hereinbelow, among the plurality of turn portions 11n, one closest to the first central axis C1 may be referred to as a turn portion 111. Furthermore, the turn portion connected to the turn portion 111 may be referred to as a turn portion 112. In the following description, when features common to the plurality of turn portions 11n will be described, the term turn portions 11n will be used.

In this embodiment, the turn portions 11n wind so as to form a rectangular shape. However, the turn portions 11n may wind so as to form a circular shape. In the present specification and the present disclosure, the term "spiral shape" means a shape of a planar curve wound in a helical shape. The planar curve referred to herein includes, as illustrated, a planar pattern in which a line is bent so as to wind repeatedly. In other words, the spiral shape means a shape of a planar curve extending away from the center as it turns (or toward the center as it turns).

Similarly, the second planar coil element 12 has a conductor 12E in which a plurality of turn portions 12n form a spiral shape. The plurality of turn portions 12n of the second planar coil element 12 are arranged in a direction orthogonal to the second central axis C2 of the spiral shape. Specifically, the plurality of turn portions 12n are connected such that the distance from the second central axis C2 gradually increases from the second central axis C2 of the spiral shape toward the radially outer side. In this way, the spiral shape is formed.

Basically, each turn portion 12n has a shape in which a line-shaped conductor portion makes a 360-degree turn about the second central axis C2 without forming an annular shape. In the case of a so-called planar coil, both ends of the turn portion 12n are displaced from each other in the radial direction. In the plurality of turn portions 12n, the radially outer end of one turn portion 12n is connected to the radially inner end of another turn portion 12n, and the other turn portion 12n extends so as to be away from the second central axis C2.

Hereinbelow, among the plurality of turn portions 12n, one closest to the second central axis C2 may be referred to as a turn portion 121. Furthermore, the turn portion connected to the turn portion 121 may be referred to as a turn portion 122. In the following description, when features common to the plurality of turn portions 12n will be described, the term turn portions 12n will be used.

In this embodiment, the shape of the second planar coil element 12 corresponds to the shape of the first planar coil element 11. Specifically, in the case where the turn portions 11n wind so as to form a rectangular shape, as in the illustrated example, the turn portions 12n also wind so as to form a rectangular shape similarly to the turn portions 11n. Furthermore, in the case where the turn portions 11n have a shape in which the turn portions wind so as to form a circular shape, the turn portions 12n may also wind so as to form a circular shape similarly to the turn portions 11n.

Here, in this embodiment, the first central axis C1 is defined as follows. First, from the radially inner end of the innermost turn portion 111, line-shaped virtual turn portions having shapes similar to the innermost turn portion 111 are sequentially drawn so as to form a spiral shape toward the radially inner side. Then, drawing is continued until a virtual turn portion that fits within a diameter of 1 cm can be drawn. A line that passes, in the direction orthogonal to the circumferential direction and the radial direction of the spiral shape, through the radially inner region of the virtual turn portion that fits within the diameter of 1 cm is defined as the first central axis C1. The second central axis C2 is defined by the same method as the first central axis C1. First, from the radially inner end of the innermost turn portion 121, line-shaped virtual turn portions having shapes similar to the innermost turn portion 121 are sequentially drawn so as to form a spiral shape toward the radially inner side. Then, drawing is continued until a virtual turn portion that fits within a diameter of 1 cm can be drawn. A line that passes, in the direction orthogonal to the circumferential direction and the radial direction of the spiral shape, through the radially inner region of the virtual turn portion that fits within the diameter of 1 cm is defined as the second central axis C2.

The radially inner end (the end close to the first central axis C1) of the first planar coil element 11 is electrically connected to the radially inner end (the end close to the second central axis C2) of the second planar coil element 12. A connection wiring portion 14 shown in Fig. 2 is a conductor and electrically connects the first planar coil element 11 and the second planar coil element 12 in series. When the first planar coil element 11 and the second planar coil element 12 are connected, the direction in which the first planar coil element 11 winds is the same as the direction in which the second planar coil element 12 winds. The term "the direction in which the first planar coil element 11 winds" described above means the direction in which the first planar coil element 11 winds from the end of the first planar coil element 11 not connected to the second planar coil element 12 to the end thereof connected to the second planar coil element 12. The end of the first planar coil element 11 not connected to the second planar coil element 12 means the radially outer end of the first planar coil element 11. The end connected to the second planar coil element 12 means the radially inner end of the first planar coil element 11. The term "the direction in which the second planar coil element 12 winds" described above means the direction in which the second planar coil element 12 winds from the end of the second planar coil element 12 connected to the first planar coil element 11 to the end thereof not connected to the first planar coil element 11. The end of the second planar coil element 12 connected to the first planar coil element 11 means the radially inner end of the second planar coil element 12. The end not connected to the first planar coil element 11 means the radially outer end of the second planar coil element 12.

In the illustrated example, for example, the connection wiring portion 14 is formed integrally with the first planar coil element 11. The connection wiring portion 14 may be connected to the second planar coil element 12 by ultrasonic connection or the like. Meanwhile, the radially outer end (the end far from the first central axis C1) of the first planar coil element 11 is connected to the first connection terminal 51. Furthermore, the radially outer end (the end far from the second central axis C2) of the second planar coil element 12 is connected to the second connection terminal 52.

In this embodiment, for example, the first planar coil element 11 and the second planar coil element 12 are formed by punching a metal plate, such as a copper plate or an aluminum plate, into a spiral shape. However, the first planar coil element 11 and the second planar coil element 12 may also be formed by etching a metal foil, such as a copper foil or an aluminum foil, into a spiral shape.

The thicknesses of the first planar coil element 11 and the second planar coil element 12 (thicknesses of the conductors 11E and 12E) are measured in the axial directions of the first planar coil element 11 and the second planar coil element 12. The thicknesses of the first planar coil element 11 and the second planar coil element 12 (thicknesses of the conductors 11E and 12E) may be, for example, 0.1 mm or more and 1.0 mm or less, may be 0.2 mm or more and 0.7 mm or less, or may be 0.3 mm or more and 0.4 mm or less. The thicknesses of the first planar coil element 11 and the second planar coil element 12 (thicknesses of the conductors 11E and 12E) may be, for example, 0.15 mm or more and 0.35 mm or less. The thickness of the first planar coil element 11 (thickness of the conductor 11E) may be the same as the thickness of the second planar coil element 12, may be less than the thickness of the second planar coil element 12, or may be greater than the thickness of the second planar coil element 12. In other words, the thickness of the second planar coil element 12 (thickness of the conductor 12E) may be the same as the thickness of the first planar coil element 11, may be greater than the thickness of the first planar coil element 11, or may be less than the thickness of the first planar coil element 11.

Furthermore, the radius of the first planar coil element 11 (the distance from the first central axis C1 to the portion farthest from the first central axis C1 in the radial direction) may be 80 mm or more, and may be 80 mm or more and 450 mm or less. The aspect ratio of the first planar coil element 11 (the conductor 11E) having a rectangular cross-sectional shape is defined by dividing the wire width (the width of each turn portion 11n in the radial direction) of the first planar coil element 11 (the conductor 11E) by the thickness of the first planar coil element 11 (the conductor 11E). The aspect ratio of the first planar coil element 11 (the conductor 11E) may be 2 or more and 12 or less, or may be 3 or more and 10 or less.

Similarly, the radius of the second planar coil element 12 (the distance from the second central axis C2 to the portion farthest from the second central axis C2 in the radial direction) may be 80 mm or more, and may be 80 mm or more and 450 mm or less. The aspect ratio of the second planar coil element 12 (the conductor 12E) having a rectangular cross-sectional shape is defined by dividing the wire width (the width of each turn portion 12n in the radial direction) of the second planar coil element 12 (the conductor 12E) by the thickness of the second planar coil element 12 (the conductor 12E). The aspect ratio of the second planar coil element 12 (the conductor 12E) may be 2 or more and 12 or less, or may be 3 or more and 10 or less.

The measurement of the thicknesses and wire widths of the conductors 11E and 12E may be performed by cutting the coil component 5 in the axial direction to expose cross sections of the conductors 11E and 12E and measuring the respective portions of the conductors 11E and 12E with a ruler or the like, or may be performed by cross-sectional image analysis. Alternatively, the first planar coil element 11 and the second planar coil element 12 may be taken out from the coil component 5, and the thicknesses of the conductors 11E and 12E may be measured with a ruler, a vernier caliper, or the like.

The first planar coil element 11 and the second planar coil element 12 overlap with a gap therebetween. This gap may be 0.5 mm or more and 1.5 mm or less. The dimension of the gap is not particularly limited, but an excessively large gap will impair thinning of the coil component 5.

The number of turns of the coil 10 (the sum of the number of turns T1 of the first planar coil element 11 and the number of turns T2 of the second planar coil element 12) is determined in consideration of the performance required for the coil component 5. More specifically, the number of turns of the coil 10 is determined such that the coil component 5 has an appropriate inductance. For example, when the coil component 5 is applied to a system S for wirelessly transmitting power to an electric vehicle, it is desirable that the inductance of the coil component 5 be about 35 µH to 50 µH. In this case, the number of turns of the coil 10 is, for example, about 8 to 10. However, the number of turns of the coil 10 is not limited thereto. The number of turns of the coil 10 may be, for example, 6 or more and 24 or less.

It is required to improve the production efficiency of the coil component 5. For this reason, improvement in the ease of handling of members constituting the coil component 5 has been studied.

In view of these circumstances, in this embodiment, the numbers of turns of the planar coil elements 11 and 12 are determined such that the number of turns T2 of the second planar coil element 12 is smaller than the number of turns T1 of the first planar coil element 11. This makes it possible to improve the ease of handling of the second planar coil element 12. Because the number of turns T2 of the second planar coil element 12 is smaller than that in the case where the first planar coil element 11 and the second planar coil element 12 have the same number of turns, handling of the second planar coil element 12 is easy. In the illustrated example, the number of turns T1 of the first planar coil element 11 is twice the number of turns T2 of the second planar coil element 12. More specifically, in the illustrated example, the number of turns of the coil 10 is about 8 to 10, and based on this, the number of turns T1 of the first planar coil element 11 is set to 6, and the number of turns T2 of the second planar coil element 12 is set to 3. In other words, the plurality of turn portions 11n include six turn portions 111 to 116, and the plurality of turn portions 12n include three turn portions 121 to 123.

Furthermore, in the illustrated example, the wire width of the second planar coil element 12 is larger than the wire width of the first planar coil element 11. This reduces the risk that the second planar coil element 12 is deformed when the second planar coil element 12 is handled. Accordingly, the ease of handling of the second planar coil element 12 is improved. Furthermore, it is possible to reduce the electrical resistance of the second planar coil element 12. In particular, in the illustrated example, the wire width of the second planar coil element 12 disposed to face the magnetic shield member 20 is two times or more the wire width of the first planar coil element 11.

The present inventors have found that a certain advantage can be obtained by changing the arrangements of the plurality of turn portions 111 to 116 of the first planar coil element 11 and the plurality of turn portions 121 to 123 of the second planar coil element 12. More specifically, the present inventors have found that, by arranging the plurality of turn portions 11n and 12n as follows, it is possible to prevent the Q value of the coil component 5 from becoming significantly lower than that of a coil component including a conventional coil having a similar number of turns. That is, in the arrangement in which the predetermined effect is obtained, as viewed in the axial direction, at least one of the plurality of turn portions 121 to 123 of the second planar coil element 12 overlaps two or more of the plurality of turn portions 111 to 116 of the first planar coil element 11. In addition, in the arrangement in which the predetermined effect is obtained, as viewed in the axial direction, each gap between the plurality of turn portions 121 to 123 of the second planar coil element 12 overlaps any one of the gaps between the plurality of turn portions 111 to 116 of the first planar coil element 11.

In the illustrated example, each turn portion 12n of the second planar coil element 12 is arranged so as to overlap, as viewed in the axial direction, two turn portions of the first planar coil element 11 that are adjacent to each other. In the illustrated example, as viewed in the axial direction, the turn portion 121 overlaps the turn portions 111 and 112. Furthermore, as viewed in the axial direction, the turn portion 122 overlaps the turn portions 113 and 114. Furthermore, as viewed in the axial direction, the turn portion 123 overlaps the turn portions 115 and 116.

Furthermore, in the illustrated example, as viewed in the axial direction, the gap between the turn portions 121 and 122 overlaps the gap between the turn portions 112 and 113. Furthermore, as viewed in the axial direction, the gap between the turn portions 122 and 123 overlaps the gap between the turn portions 114 and 115.

Furthermore, in the illustrated example, as viewed in the axial direction, the edges of each turn portion 12n of the second planar coil element 12 overlap the edges of any of the turn portions of the first planar coil element 11. More specifically, the radially inner edge of each turn portion 12n of the second planar coil element 12 overlaps the radially inner edge of any of the turn portions of the first planar coil element 11. Furthermore, the radially outer edge of each turn portion 12n of the second planar coil element 12 overlaps the radially outer edge of any of the turn portions of the first planar coil element 11. In the illustrated example, the radially inner edge of the turn portion 121 overlaps the radially inner edge of the turn portion 111. The radially outer edge of the turn portion 121 overlaps the radially outer edge of the turn portion 112. The radially inner edge of the turn portion 122 overlaps the radially inner edge of the turn portion 113. The radially outer edge of the turn portion 122 overlaps the radially outer edge of the turn portion 114. The radially inner edge of the turn portion 123 overlaps the radially inner edge of the turn portion 115. The radially outer edge of the turn portion 123 overlaps the radially outer edge of the turn portion 116.

The ratio of the number of turns T1 of the first planar coil element 11 to the number of turns T2 of the second planar coil element is not limited to 2:1. For example, the ratio may be 3:1. The number of turns T1 of the first planar coil element 11 need not be an integer multiple of the number of turns T2 of the second planar coil element 12. For example, the number of turns T1 of the first planar coil element 11 may be 5, and the number of turns T2 of the second planar coil element 12 may be 3. In this case, the wire width of some of turn portions of the second planar coil element 12 may be different from the wire width of other turn portions. Then, as viewed in the axial direction, each gap between the plurality of turn portions 121 to 123 of the second planar coil element 12 may overlap any one of the gaps between the plurality of turn portions of the first planar coil element 11. For example, the wire widths of the respective turn portions 12n of the second planar coil element 12 may be determined such that the turn portion 121 overlaps the turn portion 111, the turn portion 122 overlaps the turn portions 112 and 113, and the turn portion 123 overlaps the turn portions 114 and 115.

The wire width of the first planar coil element 11 (the conductor 11E), that is, the radial width (the width in the radial direction) of each turn portion 11n, is not particularly limited. However, for example, in view of enabling transmission of power of 1 kW or more, desirably 5 kW or more, in a frequency band of a high-frequency current of 79 kHz to 90 kHz, the radial width of the turn portion 11n may be 2 mm or more and 20 mm or less. In this case, the radial width of the turn portion 11n may be 2 mm or more and 16 mm or less, 2 mm or more and 12 mm or less, or 2 mm or more and 8 mm or less.

The wire width of the second planar coil element 12 (the conductor 12E), that is, the radial width (the width in the radial direction) of each turn portion 12n, is also not particularly limited. However, the wire widths of the respective turn portions 12n of the second planar coil element 12 are determined such that, as viewed in the axial direction, each gap between the plurality of turn portions 121 to 123 of the second planar coil element 12 overlaps any one of the gaps between the plurality of turn portions 111 to 116 of the first planar coil element 11.

### Magnetic Shield Member

The magnetic shield member 20 is provided for transmission of magnetism and/or suppression of leakage magnetic field. The magnetic shield member 20 is a sheet-like member separate from the first planar coil element 11, the second planar coil element 12, and the holder 30. What is meant by that the magnetic shield member 20 is separate from the first planar coil element 11, the second planar coil element 12, and the holder 30 is that the magnetic shield member 20 is not integrated with the first planar coil element 11, the second planar coil element 12, or the holder 30. However, the magnetic shield member 20 and the holder 30 may be joined via an adhesive layer or the like. The magnetic shield member 20 is formed to have a size large enough to encompass the first planar coil element 11 and the second planar coil element 12 in plan view. The magnetic shield member 20 overlaps the first planar coil element 11, the second planar coil element 12, and the holder 30, and comes into direct contact with a part (a second interlayer portion 32 described below) of the holder 30.

The magnetic shield member 20 in this embodiment is magnetic and contains a magnetic material or is made of a magnetic material. In the coil component 5, when current is supplied to the first planar coil element 11 and the second planar coil element 12, a magnetic field is generated. Such a magnetic field generated in the coil component 5 is generated so as to spread in all directions with respect to the central axes C1 and C2 of the first planar coil element 11 and the second planar coil element 12. At this time, because the magnetic shield member 20 is magnetic, the magnetic flux lines that tend to spread can be oriented toward the central axes C1 and C2. The coil component 5 can be installed in a mobile body, and in this case, if a magnetic field generated in the coil component 5 flows to another mobile body component side, an adverse effect may occur in the mobile body component. In such a case, the magnetic shield member 20 can suppress a leakage magnetic field that does not contribute to generation of current.

The magnetic shield member 20 preferably contains a soft magnetic material or a nanocrystalline magnetic material. More specifically, the magnetic shield member 20 contains ferrite, preferably soft ferrite. In this embodiment, the magnetic shield member 20 contains plate-shaped ferrite. More specifically, the magnetic shield member 20 is formed by arranging a plurality of plate-shaped ferrites in a sheet shape.

The relative permeability of the magnetic shield member 20 may be 500 or more, and may be 1000 or more. The relative permeability of the magnetic shield member 20 may be 500 or more and 3000 or less, or may be 1000 or more and 3000 or less. Note that the relative permeability in the present specification is a value measured at a frequency of 85 kHz and at an ambient temperature of 23 degrees.

### Holder

As described above, the holder 30 serves to maintain the gap between the first planar coil element 11 and the second planar coil element 12 and to maintain the gap between the second planar coil element 12 and the magnetic shield member 20. Furthermore, in this embodiment, the holder 30 also serves to integrate the first planar coil element 11 and the second planar coil element 12. Specifically, as shown in Fig. 3, the holder 30 includes a first interlayer portion 31 disposed between the first planar coil element 11 and the second planar coil element 12, and a second interlayer portion 32 disposed between the second planar coil element 12 and the magnetic shield member 20.

In this embodiment, the first interlayer portion 31 is joined to the first planar coil element 11 and the second planar coil element 12, and the second interlayer portion 32 is joined to the second planar coil element 12. Thus, the first planar coil element 11, the second planar coil element 12, and the holder 30 are integrated. Specifically, the first interlayer portion 31 fills gaps between mutually facing turn portions 11n and 12n, from the innermost turn portions 111 and 121 to the outermost turn portions 116 and 123 of the first planar coil element 11 and the second planar coil element 12. The second interlayer portion 32 fills gaps between all of the turn portions 121 to 123 and portions of the magnetic shield member 20 facing these turn portions, from the innermost turn portion 121 to the outermost turn portion 123 of the second planar coil element 12.

Furthermore, in the illustrated example, the first interlayer portion 31 further fills gaps between the plurality of turn portions 111 to 116 of the first planar coil element 11. In the illustrated example, the second interlayer portion 32 further fills gaps between the plurality of turn portions 121 to 123 of the second planar coil element 12.

Furthermore, the holder 30 in this embodiment further includes an outer peripheral frame portion 33 located on the outer peripheral side of the first interlayer portion 31 and the second interlayer portion 32, and an inner peripheral core portion 34 located on the inner peripheral side of the first interlayer portion 31 and the second interlayer portion 32. The first interlayer portion 31 and the second interlayer portion 32 are connected to the outer peripheral frame portion 33 and are also connected to the inner peripheral core portion 34. Thus, the first interlayer portion 31, the second interlayer portion 32, the outer peripheral frame portion 33, and the inner peripheral core portion 34 are formed as an integral body.

The holder 30 may be configured such that the first interlayer portion 31 functions only for the purpose of maintaining the gap between the first planar coil element 11 and the second planar coil element 12, and the second interlayer portion 32 functions only for the purpose of maintaining the gap between the second planar coil element 12 and the magnetic shield member 20. In this case, needless to say, the first interlayer portion 31 need not be joined to the first planar coil element 11 and the second planar coil element 12, and the second interlayer portion 32 need not be joined to the second planar coil element 12. The holder 30 need not include either the outer peripheral frame portion 33 or the inner peripheral core portion 34.

The holder 30 is insulating and contains a resin. The holder 30 may be formed of, for example, a resin having insulating properties. The resin contained in the holder 30 is not particularly limited as long as the resin is non-magnetic and insulating. For example, the holder 30 may contain polyethylene or polypropylene, or may be formed of polyethylene or polypropylene. For example, the holder 30 may contain a fiber-reinforced plastic or may be formed of a fiber-reinforced plastic. More specifically, the holder 30 may contain glass-fiber-reinforced polyamide or may be formed of glass-fiber-reinforced polyamide. "To be insulating" means to have a volume resistivity of 10¹⁰ Ω·m or more.

### Magnetic Wall Portion

As shown in Fig. 3, the magnetic wall portion 40 extends in the axial direction. Also, as can be seen from Figs. 2 and 3, as viewed in the axial direction, the magnetic wall portion 40 extends along gaps between the plurality of turn portions 111 to 116 of the first planar coil element 11. In the illustrated example, the magnetic wall portion 40 has a spiral shape and, as viewed in the axial direction, overlaps the gaps between the plurality of turn portions 111 to 116 of the first planar coil element 11.

The magnetic wall portion 40 is magnetic, and improves the coil performance by suppressing eddy current loss and leakage magnetic flux and by increasing a coupling coefficient. Preferably, the relative permeability of the magnetic wall portion 40 is 2.0 or more, and may be 2.0 or more and 20.0 or less. More preferably, the relative permeability of the magnetic wall portion 40 is 5.0 or more, and may be 5.0 or more and 20.0 or less. Although the relative permeability of the magnetic wall portion 40 is not particularly limited, an excessively high relative permeability may undesirably impair the flexibility and strength of the magnetic wall portion 40. Accordingly, the relative permeability of the magnetic wall portion 40 may be 200 or less.

In the example shown in Fig. 3, the magnetic wall portion 40 is disposed to face the second surface 11b of the first planar coil element 11. In the illustrated example, the magnetic wall portion 40 is disposed on the same plane as the second surface 11b. The height (dimension in the axial direction) of the magnetic wall portion 40 is not particularly limited, but may be, for example, 0.5 mm or more, and may be 1.0 mm or more.

In this embodiment, for example, the magnetic wall portion 40 contains a holding material containing a resin, and a plurality of or numerous magnetic particles made of a magnetic material. The magnetic particles are held in the holding material. The holding material is insulating and, more specifically, is non-magnetic and insulating. The holding material is not particularly limited, but may include, for example, polyethylene or polypropylene, or may be formed of polyethylene or polypropylene. The holding material may include, for example, a fiber-reinforced plastic or may be formed of a fiber-reinforced plastic. More specifically, the holding material may include glass-fiber-reinforced polyamide or may be formed of glass-fiber-reinforced polyamide.

The magnetic particles may be formed of any one or two or more of ferrite, in particular soft magnetic ferrite, a nanocrystalline magnetic material, silicon steel, electromagnetic soft iron, and an amorphous metal.

### Connection Terminal

As shown in Figs. 2 and 4, the first connection terminal 51 is connected to the radially outer end of the turn portion 116 of the first planar coil element 11. The second connection terminal 52 is connected to the radially outer end of the turn portion 123 of the second planar coil element 12. The first connection terminal 51 and the second connection terminal 52 can be used, for example, when the terminals are connected to the high-frequency current supply unit 1A or the conversion unit 2A. Connection between the first connection terminal 51 and the turn portion 116 and connection between the second connection terminal 52 and the turn portion 123 may be performed by ultrasonic bonding. However, the connection method is not limited thereto, and, for example, connection by a conductive adhesive may be employed.

### Modifications

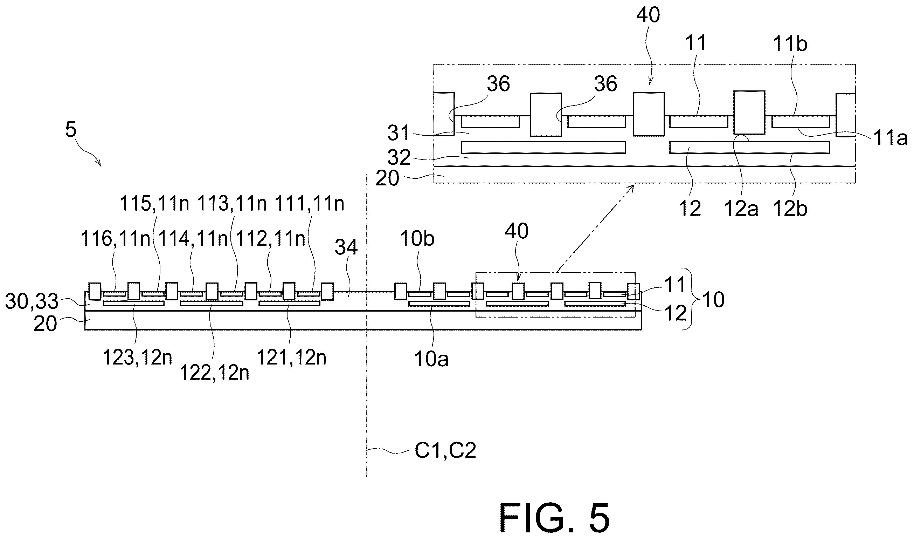

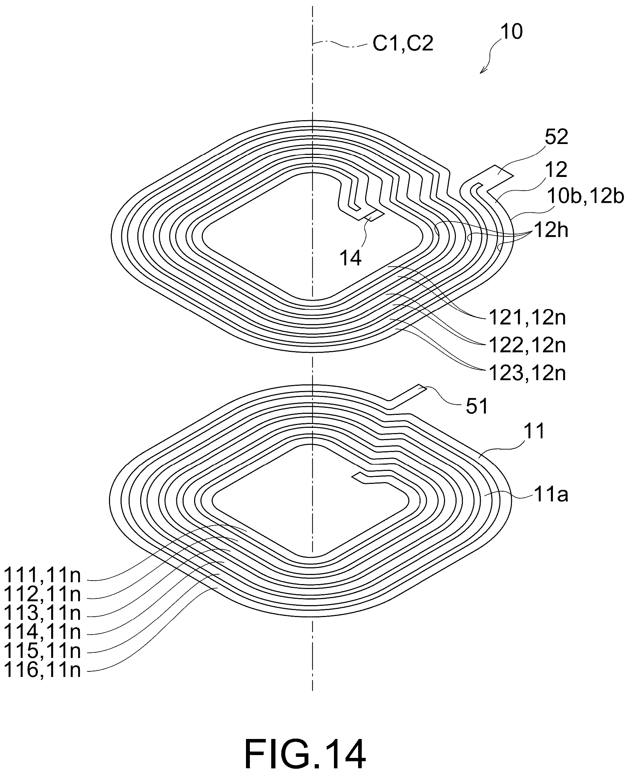

Various changes can be made to the above-described embodiment. Hereinbelow, modifications of this embodiment will be described with reference to Figs. 5 to 15.

For example, the magnetic wall portion 40 may extend in the axial direction from one side to the other side of the first planar coil element 11 through gaps between the plurality of turn portions 111 to 116 of the first planar coil element 11. In this case, the holder 30 may be provided with a slit 36 for receiving the magnetic wall portion 40.

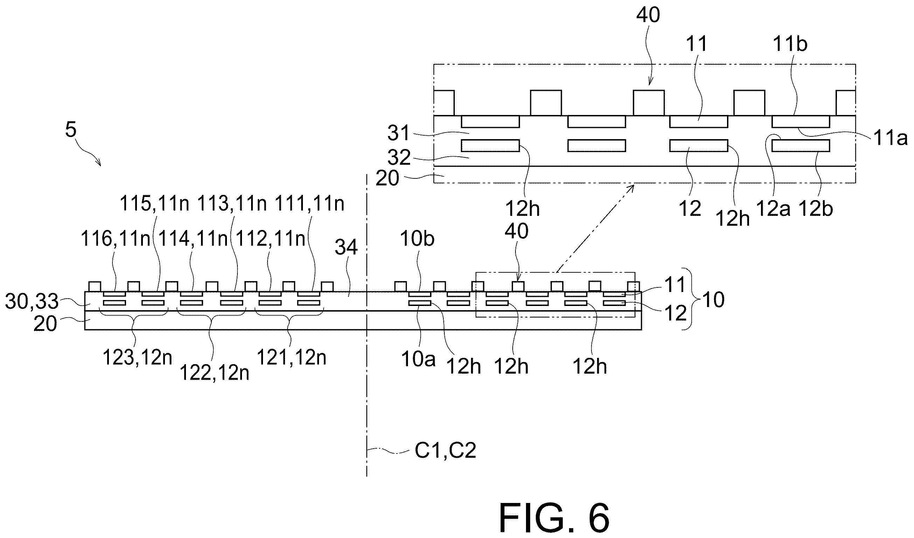

Furthermore, for example, as shown in Figs. 6 to 8, the second planar coil element 12 may be provided with a slotted hole 12h extending along the plurality of turn portions 121 to 123 of the second planar coil element 12. In this case, the skin effect allows a larger current to flow in the second planar coil element 12. In the illustrated example, the slotted hole 12h extends along the spiral shape of the second planar coil element 12.

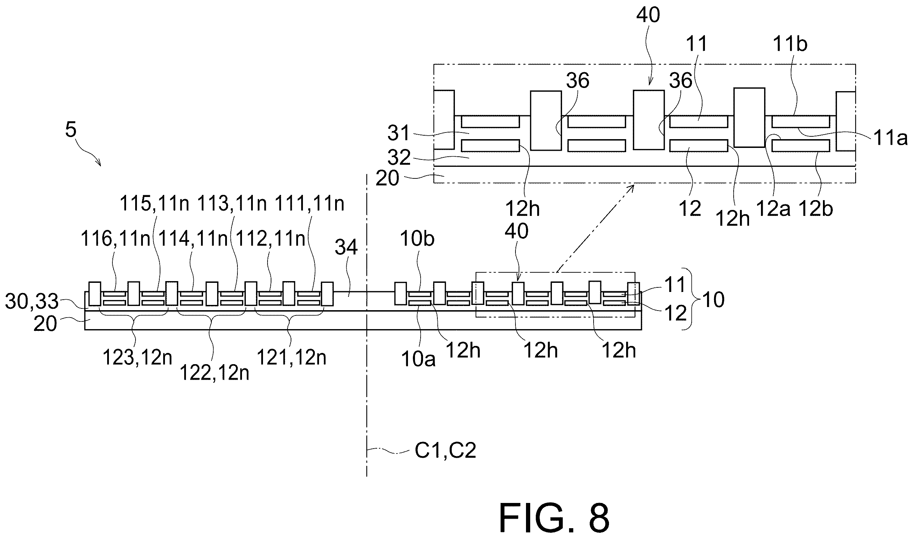

As can be seen from Figs. 6 and 8, when the second planar coil element 12 is provided with the slotted hole 12h, the slotted hole 12h may overlap any one of the gaps between the plurality of turn portions 111 to 116 of the first planar coil element 11 as viewed in the axial direction. In this case, as shown in Fig. 8, the magnetic wall portion 40 may extend into the slotted hole 12h of the second planar coil element 12.

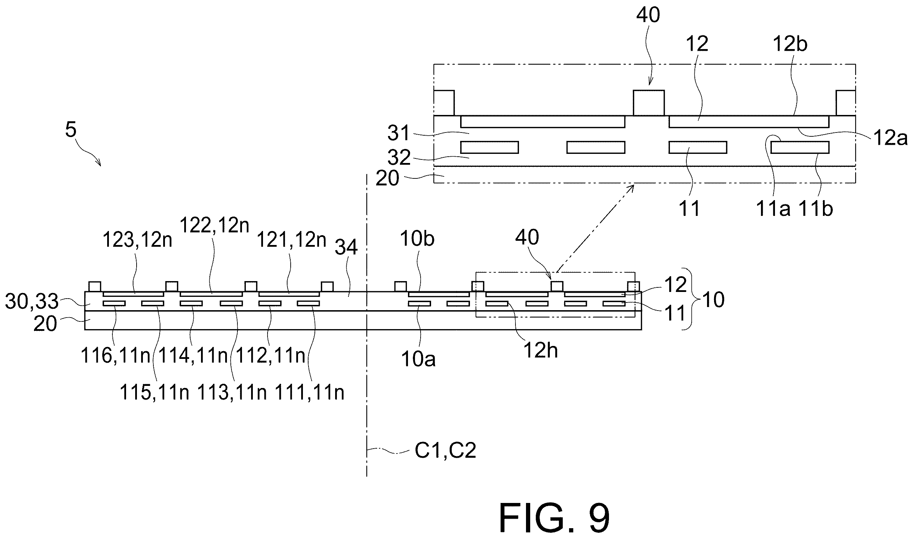

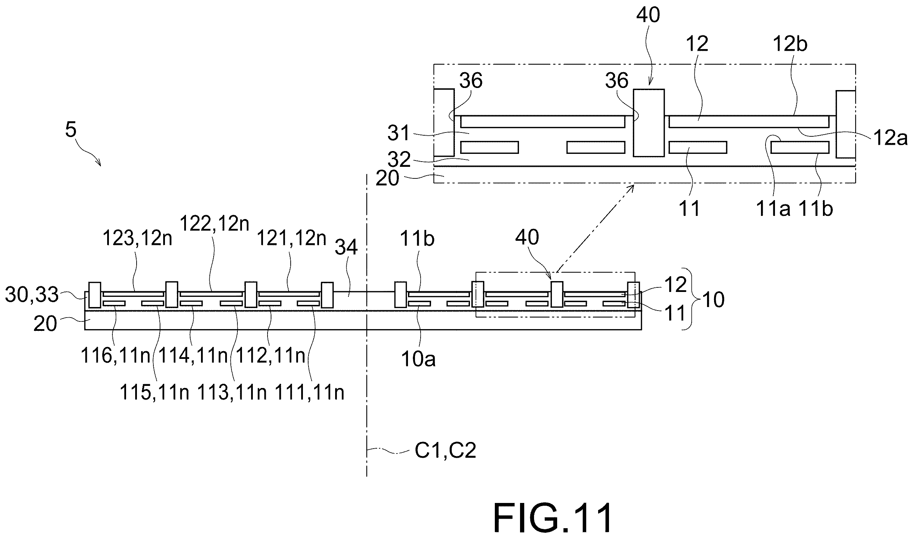

Furthermore, as shown in Figs. 9 to 11, the first planar coil element 11 may be disposed to face the magnetic shield member 20. In other words, the first planar coil element 11 may be disposed between the second planar coil element 12 and the magnetic shield member 20. In this case, the fourth surface 12b of the second planar coil element 12 forms the front surface 10b of the coil 10. The second surface 11b of the first planar coil element 11 forms the back surface 10a of the coil 10. In this case, the magnetic wall portion 40 may extend along gaps between the plurality of turn portions 121 to 123 of the second planar coil element 12 as viewed in the axial direction. In the examples shown in Figs. 9 and 11, the magnetic wall portion 40 overlaps the gaps between the plurality of turn portions 121 to 123 of the second planar coil element 12 as viewed in the axial direction. As shown in Fig. 9, the magnetic wall portion 40 may be disposed to face the fourth surface 12b of the second planar coil element 12. In the example shown in Fig. 9, the magnetic wall portion 40 is disposed on the same plane as the fourth surface 12b. Alternatively, as shown in Fig. 11, the magnetic wall portion 40 may extend in the axial direction from one side to the other side of the second planar coil element 12 through gaps between the plurality of turn portions 121 to 123 of the second planar coil element 12.

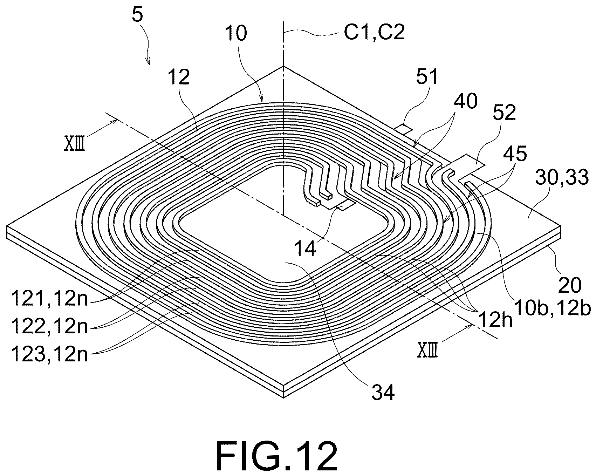

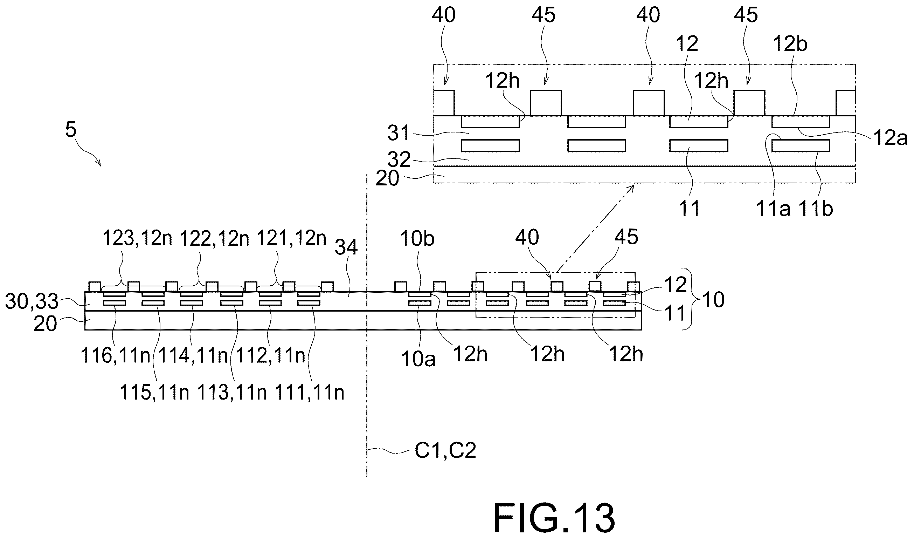

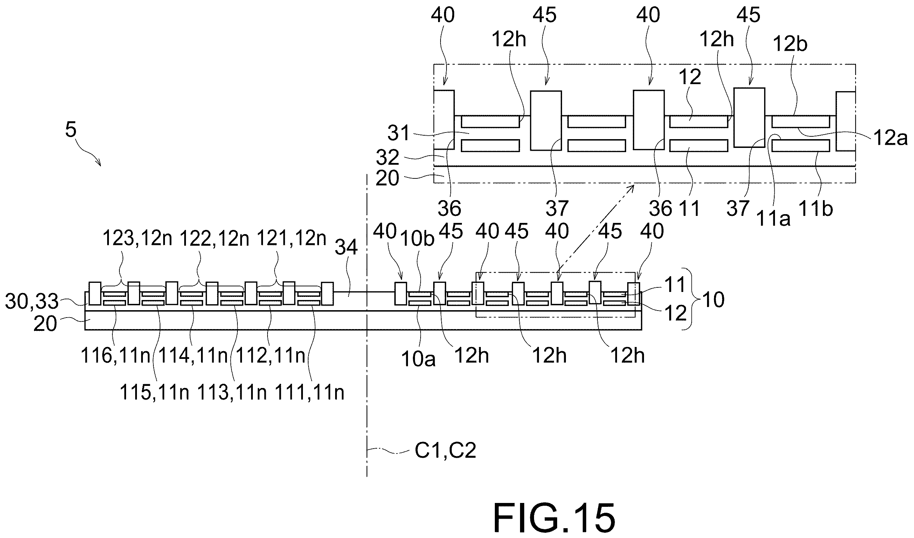

Furthermore, when the first planar coil element 11 is disposed to face the magnetic shield member 20, as shown in Figs. 12 to 15, the second planar coil element 12 may be provided with a slotted hole 12h extending along the plurality of turn portions 121 to 123 of the second planar coil element 12. In this case, the coil component 5 may further include an additional magnetic wall portion 45. The additional magnetic wall portion 45 extends in the axial direction. Furthermore, as viewed in the axial direction, the additional magnetic wall portion 45 extends along the slotted hole 12h. In the examples shown in Figs. 12 to 15, the additional magnetic wall portion 45 overlaps the slotted hole 12h as viewed in the axial direction. As shown in Figs. 12 to 14, the additional magnetic wall portion 45 may be disposed to face the fourth surface 12b of the second planar coil element 12. In the examples shown in Figs. 12 and 13, the additional magnetic wall portion 45 is disposed on the same plane as the fourth surface 12b. Alternatively, as shown in Fig. 15, the additional magnetic wall portion 45 may extend in the axial direction from one side to the other side of the second planar coil element 12 through the slotted hole 12h provided in the plurality of turn portions 121 to 123 of the second planar coil element 12. In this case, the holder 30 may be provided with a slit 37 for receiving the additional magnetic wall portion 45.

### Use of Coil Component

The coil component 5 according to this embodiment can be used as a power transmission coil in the power transmitter 1 of the above-described wireless power transmission system S, and can be used as a power reception coil in the power receiver 2.

When the coil component 5 is used as the power transmission coil, the first connection terminal 51 and the second connection terminal 52 are connected to the high-frequency current supply unit 1A or an AC power source as shown in Fig. 1. When a high-frequency current is supplied to the coil component 5, the current can be made to flow from the first connection terminal 51 to the planar coil element 11 and then from the second connection terminal 52 to the high-frequency current supply unit 1A or the AC power source. Alternatively, the current can be made to flow from the second connection terminal 52 to the planar coil element 11 and then from the first connection terminal 51 to the high-frequency current supply unit 1A or the AC power source. This makes it possible to generate a magnetic field including magnetic flux lines along a central axis C1 of the planar coil element 11.

Meanwhile, when the coil component 5 is used as the power reception coil, a high-frequency current can be generated in the planar coil element 11 by receiving or generating a magnetic field including magnetic flux lines passing through the inside of the planar coil element 11. Then, this high-frequency current can be supplied from the first connection terminal 51 or the second connection terminal 52 to an external device.

The coil component 5 can also be used in transformers, antennas, and the like. For example, when the coil component 5 serves as a primary-side coil in a transformer, the first connection terminal 51 and the second connection terminal 52 are connected to an AC power source. When a high-frequency current is supplied, magnetic flux can be supplied from the central side of the planar coil element 11 to the iron core.

### Evaluation Simulation of Performance of Coil Component 5

Hereinbelow, a simulation performed for evaluating the performance of coil components 5, 5', 5", 5‴, and 5ʺʺ according to Examples 1 to 4 and Comparative Examples 1 to 6 will be described. The simulation was performed using Femtet (registered trademark) manufactured by Murata Software Co., Ltd.

Common conditions in the simulation of Examples 1 to 4 and Comparative Examples 1 to 6 are as follows.
- A high-frequency current of 40 A and 85 kHz is supplied.
- The first planar coil element 11 and the second planar coil elements 12, 12', 12" are formed of copper.
- The dimension of the gap between the first planar coil element 11 and the second planar coil elements 12, 12', 12", and 12‴ is 0.50 mm, and the dimension of the gap between the coils 10, 10', 10", and 10‴ and the magnetic shield member 20 is 1.0 mm.
- The relative permeability of the magnetic shield member 20 is 3000.
- The magnetic wall portion 40 is disposed on the same plane as the front surfaces 10b, 10b', 10b", and 10b‴ of the coils 10, 10', 10", and 10"'. The relative permeability of the magnetic wall portion 40 is 5.0.

Common conditions in the simulation of Examples 1 to 4 are as follows.
- The number of turns T1 of the first planar coil element 11 is 6, and the number of turns T2 of the second planar coil element 12 is 3.
- The wire width of the first planar coil element 11 is 9 mm, and the wire width of the second planar coil element 12 is 22 mm.
- As viewed in the axial direction, the radially inner edge of the turn portion 121 overlaps the radially inner edge of the turn portion 111. As viewed in the axial direction, the radially outer edge of the turn portion 121 overlaps the radially outer edge of the turn portion 112. As viewed in the axial direction, the radially inner edge of the turn portion 122 overlaps the radially inner edge of the turn portion 113. As viewed in the axial direction, the radially outer edge of the turn portion 122 overlaps the radially outer edge of the turn portion 114. As viewed in the axial direction, the radially inner edge of the turn portion 123 overlaps the radially inner edge of the turn portion 115. As viewed in the axial direction, the radially outer edge of the turn portion 123 overlaps the radially outer edge of the turn portion 116.

Individual conditions in the simulation of Examples 1 to 4 and Comparative Examples 1 to 4 are as follows.

### EXAMPLE 1

In the coil component 5 of Example 1, as in the example shown in Figs. 2 to 4, the magnetic shield member 20 is disposed to face the second planar coil element 12. The thickness of the first planar coil element 11 is 0.25 mm, and the thickness of the second planar coil element 12 is 0.5 mm. As viewed in the axial direction, the magnetic wall portion 40 extends along the gaps between the plurality of turn portions 111 to 116 of the first planar coil element 11 and overlaps the gaps.

### EXAMPLE 2

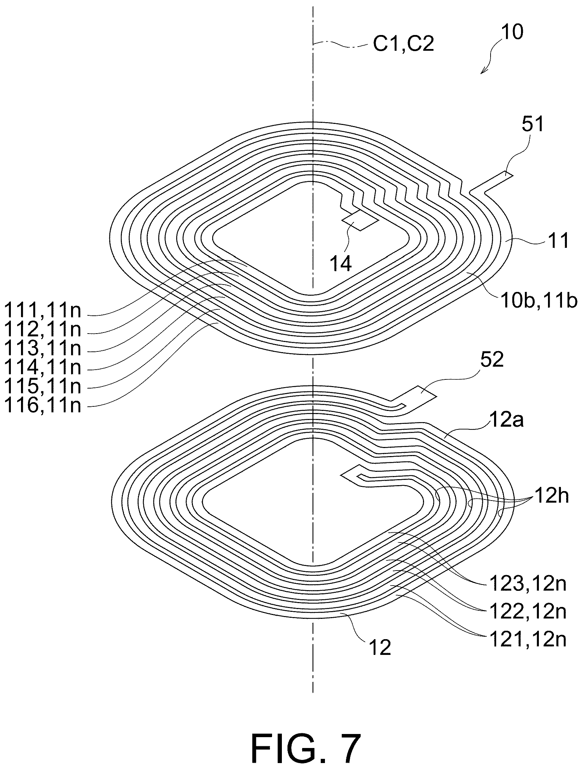

In the coil component 5 of Example 2, as in the example shown in Figs. 6 and 7, the magnetic shield member 20 is disposed to face the second planar coil element 12. The second planar coil element 12 has the slotted hole 12h extending along the spiral shape of the second planar coil element 12. The slotted hole 12h overlaps the gap between the turn portions 111 and 112, the gap between the turn portions 113 and 114, and the gap between the turn portions 115 and 116 as viewed in the axial direction. The width of the slotted hole 12h in the radial direction is 9 mm. Other configurations are the same as the configurations in Example 1.

### EXAMPLE 3

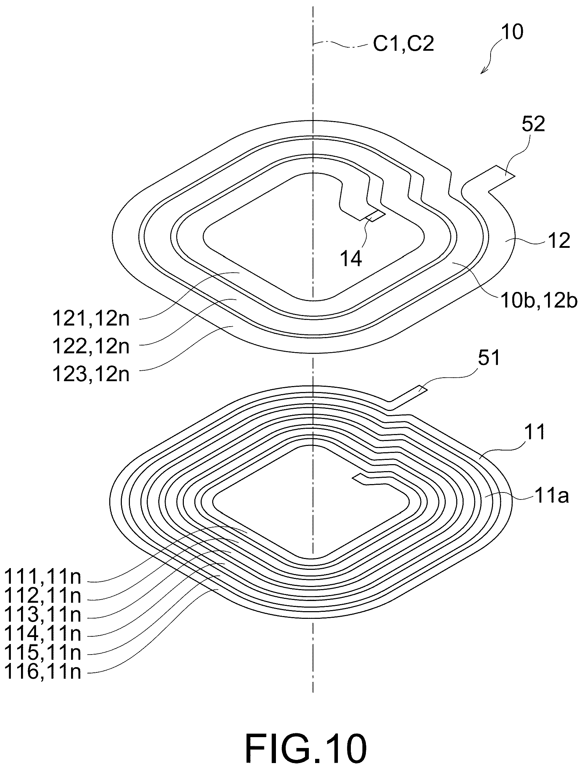

In the coil component 5 of Example 3, as in the example shown in Figs. 9 and 10, the magnetic shield member 20 is disposed to face the first planar coil element 11. The thickness of the first planar coil element 11 is 0.5 mm, and the thickness of the second planar coil element 12 is 0.25 mm. The magnetic wall portion 40 is disposed to face the fourth surface 12b of the second planar coil element 12. As viewed in the axial direction, the magnetic wall portion 40 extends along the gaps between the plurality of turn portions 121 to 123 of the second planar coil element 12 and overlaps these gaps. Other configurations are the same as the configurations in Example 1.

### EXAMPLE 4

In the coil component 5 of Example 4, as in the example shown in Figs. 12 to 14, the magnetic shield member 20 is disposed to face the second planar coil element 12. The thickness of the first planar coil element 11 is 0.25 mm, and the thickness of the second planar coil element 12 is 0.5 mm. The second planar coil element 12 has the slotted hole 12h extending along the spiral shape of the second planar coil element 12. The slotted hole 12h overlaps the gap between the turn portions 111 and 112, the gap between the turn portions 113 and 114, and the gap between the turn portions 115 and 116 as viewed in the axial direction. The width of the slotted hole 12h in the radial direction is 9 mm. An additional magnetic wall portion 45 is disposed to face the fourth surface 12b of the second planar coil element 12. As viewed in the axial direction, the additional magnetic wall portion 45 extends along the slotted hole 12h and overlaps the slotted hole 12h. The relative permeability of the additional magnetic wall portion 45 is 5.0. Other configurations are the same as the configurations in Example 3.

### COMPARATIVE EXAMPLE 1

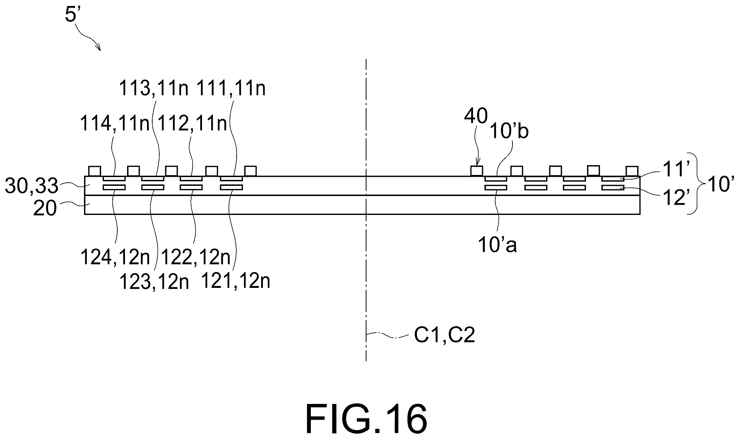

In the conventional coil component 5' of Comparative Example 1, as shown in Fig. 16, the magnetic shield member 20 is disposed to face the second planar coil element 12'. The first planar coil element 11' has four turn portions 111 to 114. The second planar coil element 12' has four turn portions 121 to 124. That is, the number of turns T1 of the first planar coil element 11' and the number of turns T2 of the second planar coil element 12' are both 4. The wire widths of the first planar coil element 11' and the second planar coil element 12' are both 14 mm. As viewed in the axial direction, the edges of the turn portion 121 overlap the edges of the turn portion 111. As viewed in the axial direction, the edges of the turn portion 122 overlap the edges of the turn portion 112. As viewed in the axial direction, the edges of the turn portion 123 overlap the edges of the turn portion 113. As viewed in the axial direction, the edges of the turn portion 124 overlap the edges of the turn portion 114. Other configurations are the same as the configurations in Example 1.

### COMPARATIVE EXAMPLE 2

In the conventional coil component 5' of Comparative Example 2, the wire width of the first planar coil element 11' and the wire width of the second planar coil element 12' are both 10 mm. Other configurations are the same as the configurations in Comparative Example 1.

### COMPARATIVE EXAMPLE 3

In the conventional coil component 5' of Comparative Example 3, the wire width of the first planar coil element 11' and the wire width of the second planar coil element 12' are both 8 mm. Other configurations are the same as the configurations in Comparative Example 1.

### COMPARATIVE EXAMPLE 4

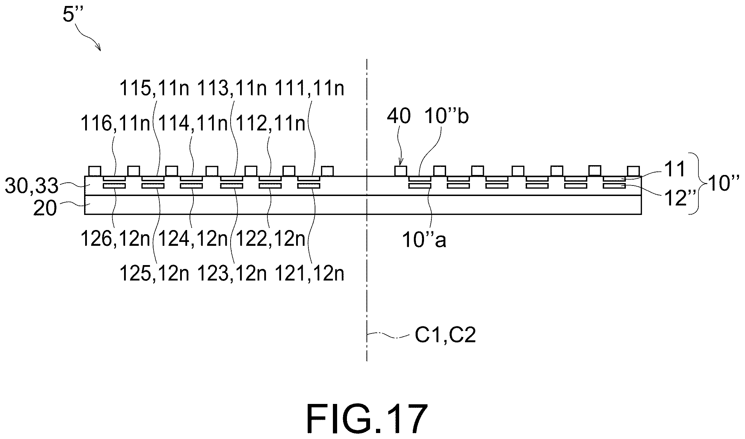

In the conventional coil component 5" of Comparative Example 4, as shown in Fig. 17, the magnetic shield member 20 is disposed to face the second planar coil element 12". The first planar coil element 11 has six turn portions 111 to 116. The second planar coil element 12" has six turn portions 121 to 126. That is, the number of turns T1 of the first planar coil element 11 and the number of turns T2 of the second planar coil element 12" are both 6. The wire width of the second planar coil element 12" is 9 mm. As viewed in the axial direction, the edges of the turn portion 121 overlap the edges of the turn portion 111. As viewed in the axial direction, the edges of the turn portion 122 overlap the edges of the turn portion 112. As viewed in the axial direction, the edges of the turn portion 123 overlap the edges of the turn portion 113. As viewed in the axial direction, the edges of the turn portion 124 overlap the edges of the turn portion 114. As viewed in the axial direction, the edges of the turn portion 125 overlap the edges of the turn portion 115. As viewed in the axial direction, the edges of the turn portion 126 overlap the edges of the turn portion 116. Other configurations are the same as the configurations in Example 1.

### COMPARATIVE EXAMPLE 5

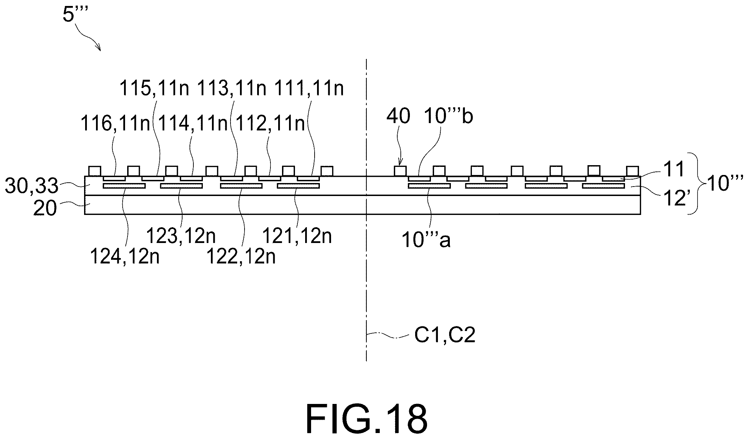

In the coil component 5‴ of Comparative Example 5, as shown in Fig. 18, the magnetic shield member 20 is disposed to face the second planar coil element 12'. The first planar coil element 11 has six turn portions 111 to 116. The second planar coil element 12' has four turn portions 121 to 124. That is, the number of turns T1 of the first planar coil element 11 is 6, and the number of turns T2 of the second planar coil element 12' is 4. The wire width of the second planar coil element 12' is 14 mm. As viewed in the axial direction, each gap between the plurality of turn portions 121 to 124 of the second planar coil element 12' does not overlap any of the gaps between the plurality of turn portions 111 to 116 of the first planar coil element 11. Other configurations are the same as the configurations in Example 1.

### COMPARATIVE EXAMPLE 6

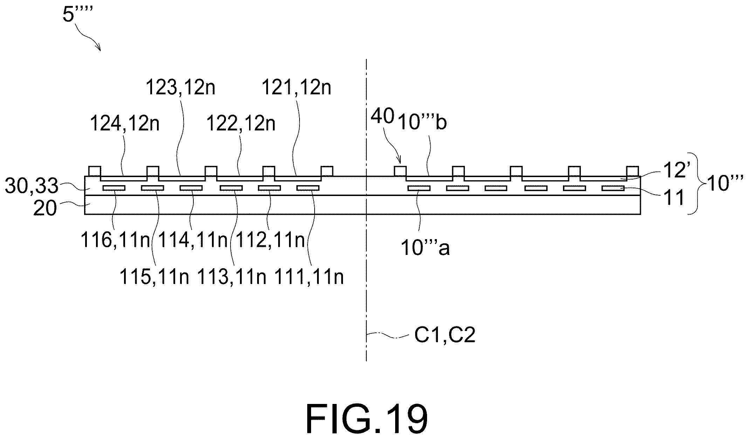

In the coil component 5ʺʺ of Comparative Example 6, as shown in Fig. 19, the magnetic shield member 20 is disposed to face the first planar coil element 11. The thickness of the first planar coil element 11 is 0.5 mm, and the thickness of the second planar coil element 12 is 0.25 mm. As viewed in the axial direction, the magnetic wall portion 40 extends along gaps between the plurality of turn portions 121 to 124 of the second planar coil element 12'. As viewed in the axial direction, the magnetic wall portion 40 extends along the gaps between the plurality of turn portions 121 to 124 of the second planar coil element 12' and overlaps the gaps. Other configurations are the same as the configurations in Comparative Example 5.

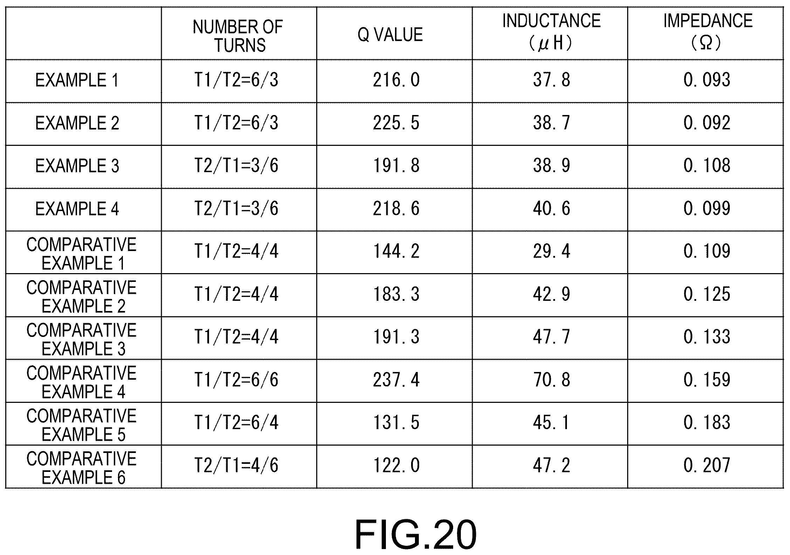

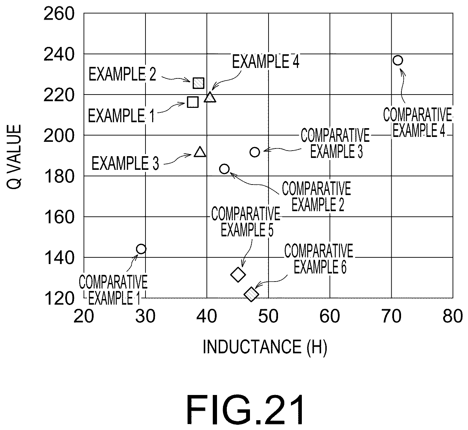

Results of the simulation are shown in Figs. 20 and 21. As can be seen from Figs. 20 and 21, it is understood that, if each gap between the plurality of turn portions 121 to 123 of the second planar coil element 12 overlaps any one of the gaps between the plurality of turn portions 111 to 116 of the first planar coil element 11 as viewed in the axial direction, a certain advantage can be obtained. More specifically, it is understood that the Q value of the coil component 5 does not significantly decrease. In this case, it is understood that, even if the number of turns T2 of the second planar coil element 12 is smaller than the number of turns T1 of the first planar coil element 11, the Q value of the coil component 5 is not significantly lower than that of the coil components 5' of Comparative Examples 2 and 3. Note that the coil components 5' of Comparative Examples 2 and 3 are coil components including the conventional coils 10', in which the wire width of the first planar coil element 11 and the number of turns of the coils are similar to those of the present invention.

The coil component 5 according to the embodiment and the modifications described above includes the coil 10 including the first planar coil element 11 and the second planar coil element 12. The first planar coil element 11 and the second planar coil element 12 have a spiral shape and have a plurality of turn portions 111 to 116 and 121 to 123, respectively. The first planar coil element 11 and the second planar coil element 12 are disposed to face each other in the axial direction extending along the central axes C1 and C2 of the spiral shapes. The first planar coil element 11 and the second planar coil element 12 are connected in series to each other. The number of turns T2 of the second planar coil element 12 is smaller than the number of turns T1 of the first planar coil element 11. Furthermore, as viewed in the axial direction, at least one of the plurality of turn portions 121 to 123 of the second planar coil element 12 overlaps two or more of the plurality of turn portions 111 to 116 of the first planar coil element 11. Furthermore, as viewed in the axial direction, each gap between the plurality of turn portions 121 to 123 of the second planar coil element 12 overlaps any one of the gaps between the plurality of turn portions 111 to 116 of the first planar coil element 11. With this coil component 5, it is possible to improve the ease of handling of the second planar coil element 12 and to improve the production efficiency of the coil component. Furthermore, as compared with the coil component 5' including the conventional coil 10' in which the wire width of the first planar coil element 11 and the number of turns of the coil are similar to those of the present invention, the risk that the Q value of the coil component 5 significantly decreases is low.

In the coil component 5 according to the embodiment and a modification, the number of turns T1 of the first planar coil element 11 is twice the number of turns T2 of the second planar coil element 12. As viewed in the axial direction, the turn portions 121, 122, and 123 of the second planar coil element 12 overlap two turn portions 111 and 112, 123 and 124, and 125 and 126 of the first planar coil element 11, respectively. Such a coil component 5 is easy to design.

In the coil component 5 according to the embodiment and a modification, the radially inner edges of the turn portions 121, 122, and 123 of the second planar coil element 12 overlap the radially inner edges of any of the turn portions 111, 113, and 114 of the first planar coil element 11 as viewed in the axial direction. Furthermore, the radially outer edges of the turn portions 121, 122, and 123 of the second planar coil element 12 overlap the radially outer edges of any of the turn portions 112, 114, and 116 of the first planar coil element.

In the coil component 5 according to a modification, the plurality of turn portions 121 to 123 of the second planar coil element 12 are provided with the slotted hole 12h extending along the turn portions 121 to 123. This allows a larger current to flow in the second planar coil element 12.

In the coil component 5 according to a modification, the slotted hole 12h extends along the spiral shape of the second planar coil element 12.

In the coil component 5 according to a modification, the slotted hole 12h overlaps any one of the gaps between the plurality of turn portions 111 to 116 of the first planar coil element 11 as viewed in the axial direction.

In the coil component 5 according to the embodiment and a modification, the thickness of the second planar coil element 12 is 0.15 mm or more and 0.35 mm or less. When the thickness of the second planar coil element 12 is small as in this case, the ease of handling of the second planar coil element 12 is significantly improved by reducing the number of turns T2 of the second planar coil element 12.

The coil component 5 according to the embodiment and a modification further includes the magnetic shield member 20 disposed to face the second planar coil element 12. In this case, it is possible to improve the performance of the coil component 5.

In the embodiment and the modification in which the second planar coil element 12 is disposed to face the magnetic shield member 20, the coil component 5 further includes the magnetic wall portion 40 extending in the axial direction and extending along gaps between the plurality of turn portions 111 to 116 of the first planar coil element 11 as viewed in the axial direction. The magnetic wall portion 40 is disposed to face the second surface 11b of the first planar coil element 11, which is opposite to the first surface 11a facing the second planar coil element 12. In this case, it is possible to further improve the performance of the coil component 5.

In the modification in which the second planar coil element 12 is disposed to face the magnetic shield member 20, the coil component 5 further includes the magnetic wall portion 40 extending in the axial direction and extending, as viewed in the axial direction, along gaps between the plurality of turn portions 111 to 116 of the first planar coil element 11. The magnetic wall portion 40 extends in the axial direction from one side to the other side of the first planar coil element 11 through the gaps between the plurality of turn portions 111 to 116 of the first planar coil element 11. In this case, it is possible to further improve the performance of the coil component 5.

The coil component 5 according to a modification further includes the magnetic shield member 20 disposed to face the first planar coil element 11. Also in this case, it is possible to improve the performance of the coil component 5.

In the modification in which the first planar coil element 11 is disposed to face the magnetic shield member 20, the coil component 5 further includes the magnetic wall portion 40 extending in the axial direction and extending, as viewed in the axial direction, along gaps between the plurality of turn portions 121 to 123 of the second planar coil element 12. The magnetic wall portion 40 is disposed to face the fourth surface 12b of the second planar coil element 12, which is opposite to the third surface 12a facing the first planar coil element 11. In this case, it is possible to further improve the performance of the coil component 5.

In the modification in which the first planar coil element 11 is disposed to face the magnetic shield member 20, the coil component 5 further includes the magnetic wall portion 40 extending in the axial direction and extending, as viewed in the axial direction, along gaps between the plurality of turn portions 121 to 123 of the second planar coil element 12. The magnetic wall portion 40 extends in the axial direction from one side to the other side of the second planar coil element 12 through the gaps between the plurality of turn portions 121 to 123 of the second planar coil element 12. In this case, it is possible to further improve the performance of the coil component 5.

In the modification in which the first planar coil element 11 is disposed to face the magnetic shield member 20, the plurality of turn portions 121 to 123 of the second planar coil element 12 are provided with the slotted hole 12h extending along the turn portions 121 to 123. The coil component 5 further includes the additional magnetic wall portion 45. The additional magnetic wall portion 45 extends in the axial direction and extends along the slotted hole 12h as viewed in the axial direction. The additional magnetic wall portion 45 is disposed to face the fourth surface 12b of the second planar coil element 12, which is opposite to the third surface 12a facing the first planar coil element 11. In this case, it is possible to further improve the performance of the coil component 5.

In the modification in which the first planar coil element 11 is disposed to face the magnetic shield member 20, in the coil component 5, the plurality of turn portions 121 to 123 of the second planar coil element 12 are provided with the slotted hole 12h extending along the turn portions 121 to 123. The coil component 5 further includes the additional magnetic wall portion 45. The additional magnetic wall portion 45 extends in the axial direction and extends along the slotted hole 12h as viewed in the axial direction. The additional magnetic wall portion 45 extends in the axial direction from one side to the other side of the second planar coil element 12 through the slotted hole 12h provided in the plurality of turn portions 121 to 123 of the second planar coil element 12. In this case, it is possible to further improve the performance of the coil component 5.

Although several modifications with respect to the above-described embodiment have been described above, it is of course possible to appropriately combine and apply a plurality of modifications.

## Claims

1. A coil component comprising: a coil including a first planar coil element and a second planar coil element each having a spiral shape having a plurality of turn portions, the first and second planar coil elements being disposed to face each other in an axial direction extending along central axes of the spiral shapes and being connected in series to each other, wherein
the number of turns of the second planar coil element is smaller than the number of turns of the first planar coil element,
as viewed in the axial direction, at least one of the plurality of turn portions of the second planar coil element overlaps two or more of the plurality of turn portions of the first planar coil element, and
as viewed in the axial direction, each gap between the plurality of turn portions of the second planar coil element overlaps any one of gaps between the plurality of turn portions of the first planar coil element.

2. The coil component according to claim 1, wherein the number of turns of the first planar coil element is twice the number of turns of the second planar coil element, and
as viewed in the axial direction, each turn portion of the second planar coil element overlaps two turn portions of the first planar coil element.

3. The coil component according to claim 1, wherein, as viewed in the axial direction, a radially inner edge of each turn portion of the second planar coil element overlaps a radially inner edge of any of the turn portions of the first planar coil element, and a radially outer edge of each turn portion of the second planar coil element overlaps a radially outer edge of any of the turn portions of the first planar coil element.

4. The coil component according to claim 1, wherein the plurality of turn portions of the second planar coil element are provided with a slotted hole extending along the turn portions of the second planar coil element.

5. The coil component according to claim 4, wherein the slotted hole extends along the spiral shape of the second planar coil element.

6. The coil component according to claim 4, wherein, as viewed in the axial direction, the slotted hole overlaps any one of the gaps between the plurality of turn portions of the first planar coil element.

7. The coil component according to claim 1, wherein the thickness of the second planar coil element is 0.15 mm or more and 0.35 mm or less.

8. The coil component according to claim 1, further comprising a magnetic shield member disposed to face the second planar coil element.

9. The coil component according to claim 8, further comprising a magnetic wall portion extending in the axial direction and extending along the gaps between the plurality of turn portions of the first planar coil element as viewed in the axial direction,
wherein the magnetic wall portion is disposed to face a second surface of the first planar coil element, the second surface being opposite to a first surface of the first planar coil element facing the second planar coil element.

10. The coil component according to claim 8, further comprising a magnetic wall portion extending in the axial direction and extending along the gaps between the plurality of turn portions of the first planar coil element as viewed in the axial direction,
wherein the magnetic wall portion extends in the axial direction from one side to the other side of the first planar coil element through the gaps between the plurality of turn portions of the first planar coil element.

11. The coil component according to claim 1, further comprising a magnetic shield member disposed to face the first planar coil element.

12. The coil component according to claim 11, further comprising a magnetic wall portion extending in the axial direction and extending along the gaps between the plurality of turn portions of the second planar coil element as viewed in the axial direction,
wherein the magnetic wall portion is disposed to face a fourth surface of the second planar coil element, the fourth surface being opposite to a third surface of the second planar coil element facing the first planar coil element.

13. The coil component according to claim 11, further comprising a magnetic wall portion extending in the axial direction and extending along the gaps between the plurality of turn portions of the second planar coil element as viewed in the axial direction,
wherein the magnetic wall portion extends in the axial direction from one side to the other side of the second planar coil element through the gaps between the plurality of turn portions of the second planar coil element.

14. The coil component according to claim 11, wherein the plurality of turn portions of the second planar coil element are provided with a slotted hole extending along the turn portions of the second planar coil element,
the coil component further comprises an additional magnetic wall portion,
the additional magnetic wall portion extends in the axial direction and extends along the slotted hole as viewed in the axial direction, and
the additional magnetic wall portion is disposed to face a fourth surface of the second planar coil element, the fourth surface being opposite to a third surface of the second planar coil element facing the first planar coil element.

15. The coil component according to claim 11, wherein the plurality of turn portions of the second planar coil element are provided with a slotted hole extending along the turn portions of the second planar coil element,
the coil component further comprises an additional magnetic wall portion,
the additional magnetic wall portion extends in the axial direction and extends along the slotted hole as viewed in the axial direction, and
the additional magnetic wall portion extends in the axial direction from one side to the other side of the second planar coil element through the slotted hole provided in the plurality of turn portions of the second planar coil element.

16. A power transmitter comprising the coil component according to claim 1.

17. A power receiver comprising the coil component according to claim 1.

18. A mobile body comprising the power receiver according to claim 17.

19. A power transmission system comprising a power transmitter and a power receiver,
wherein at least one of the power transmitter and the power receiver includes the coil component according to claim 1.
